# EUROPEAN PATENT APPLICATION

(11) **EP 1 986 452 A1**
(43) Date of publication of application: **29.10.2008**
(21) Application number: 07714087.9
(22) Date of filing: 13.02.2007
(51) Int. Cl.: H04Q 7/22

(54) **MOBILE STATION, BASE STATION, AND CELL SELECTION METHOD**

(30) Priority: 15.02.2006 JP 2006038510
(71) Applicant: NTT DoCoMo, Inc., Chiyoda-ku Tokyo 100-6150 (JP)
(72) Inventor: ABETA, Sadayuki, Tokyo 100-6150 (JP); ISHII, Minami, Tokyo 100-6150 (JP); NAKAMURA, Takehiro, Tokyo 100-6150 (JP)
(74) Representative: HOFFMANN EITLE
(86) International application number: PCT/JP2007/052505
(87) International publication number: WO 2007/094310

(57) **Abstract**

In a disclosed method, a mobile station determines whether handover is intra-base-station based on a received signal; the mobile station sends a handover request indicating the determination result to a base station; the base station determines whether the handover is intra-base-station or inter-base-station based on the handover request; and the base station performs an intra-base-station handover process based on a CQI reception level threshold for intra-base-station handover if the handover is intra-base-station.

## Description

### TECHNICAL FIELD

The present invention generally relates to a mobile station, a base station, and a cell selection method.

### BACKGROUND ART

In conventional mobile communication systems, such as IMT-2000, when a mobile station moves across cells, the mobile station measures the reception level of a destination cell without taking into account whether the destination cell belongs to the same current base station or to a different base station and reports the reception level to the destination cell for handover.

In such a mobile communication system, handover is controlled by an upper node such as a radio network controller (RNC) . In this case, when a mobile station moves from cell #1 to cell #2, whether to perform handover is determined solely by the RNC.

Thus, in conventional methods, a handover process is performed without taking into account whether a destination cell belongs to the same current base station or to a different base station. In other words, in a conventional mobile communication system, only one cell selection method is employed, and handover is controlled by an upper node such as the RNC even when it can be controlled easily and at high speed within the same base station.

### DISCLOSURE OF INVENTION

### PROBLEMS TO BE SOLVED BY THE INVENTION

With the background art technologies described above, the delay caused by handover processes becomes significant because all handover processes are controlled by the RNC.

In 3GPP long term evolution (LTE), a method for shortening the handover processing time is being discussed. In the method, a function to control handover is provided in the base station.

More specifically, when handover is performed, an upper layer, e.g., radio resource control (RRC), in a base station determines whether the destination cell belongs to the same current base station. This method requires high-level control within a base station. For example, it is necessary to control interaction between the upper layer (RRC) and a lower layer (media access control (MAC)) to perform fast cell (sector) selection. Therefore, although this method can reduce the delay compared with conventional methods, another delay is caused by the control processes between layers and it is difficult to instantaneously switch cells.

One objective of the present invention is to provide a mobile station, a base station, and a cell selection method that make it possible to reduce the handover processing time between cells belonging to the same base station.

### MEANS FOR SOLVING THE PROBLEMS

An embodiment of the present invention provides a mobile station including a determining unit configured to determine whether handover is intra-base-station based on a received signal; and a reporting unit configured to report the determination result to a base station.

This configuration makes it possible to report that the handover is intra-base-station to the base station.

Another embodiment of the present invention provides a base station including a determining unit configured to determine whether handover is intra-base-station or inter-base-station based on a handover request from a mobile station; and an intra-base-station handover processing unit configured to perform an intra-base-station handover process based on a reception level threshold for intra-base-station handover if the handover is intra-base-station.

With the above configuration, the base station is able to perform the intra-base-station handover process based on information from the mobile station indicating that the handover is intra-base-station and on the reception level threshold for intra-base-station handover.

Still another embodiment of the present invention provides a cell selection method that includes a handover determining step of determining, by a mobile station, whether handover is intra-base-station based on a received signal; a handover request sending step of sending, by the mobile station, a handover request indicating the determination result to a base station; an inter-base-station handover determining step of determining, by the base station, whether the handover is intra-base-station or inter-base-station based on the handover request; and an intra-base-station handover processing step of performing, by the base station, an intra-base-station handover process based on a reception level threshold for intra-base-station handover if the handover is intra-base-station.

This method enables the mobile station to report that the handover is intra-base-station to the base station, and enables the base station to perform the intra-base-station handover process based on information from the mobile station indicating that the handover is intra-base-station and on the reception level threshold for intra-base-station handover.

### ADVANTAGEOUS EFFECT OF THE INVENTION

Embodiments of the present invention provide a mobile station, a base station, and a cell selection method that make it possible to reduce the handover processing time between cells belonging to the same base station.

### BRIEF DESCRIPTION OF THE DRAWINGS

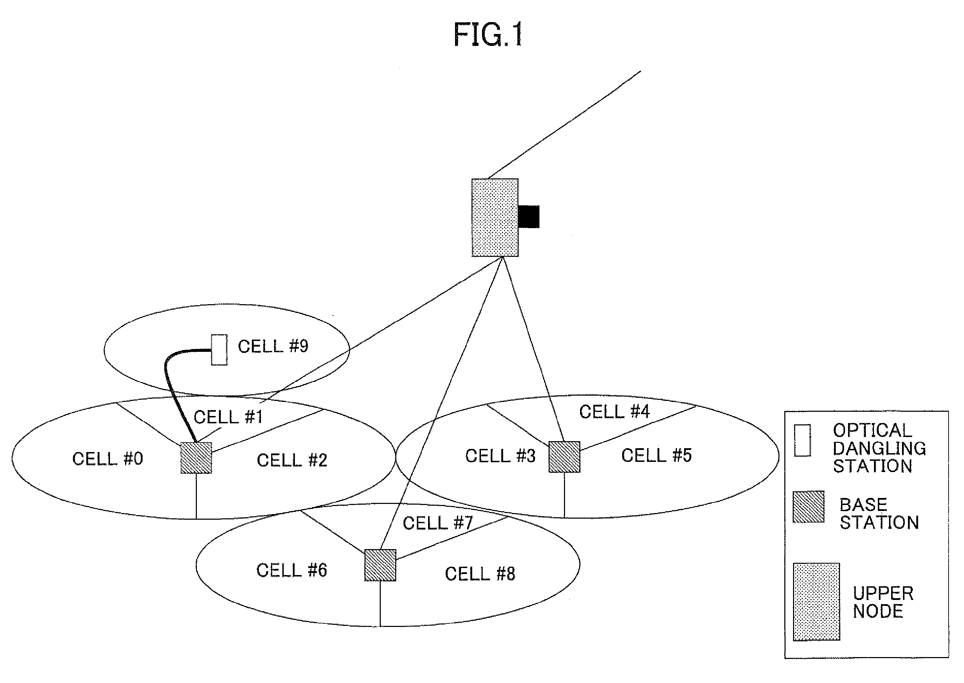

FIG. 1 is a drawing illustrating a wireless communication system;
FIG. 2 is a drawing illustrating a wireless communication system according to an embodiment of the present invention;
FIG. 3 is a block diagram illustrating a base station according to an embodiment of the present invention;
FIG. 4 is a block diagram illustrating a mobile station according to an embodiment of the present invention;
FIG. 5 is a flowchart showing operations of a mobile station according to an embodiment of the present invention;
FIG. 6 is a graph used to describe a cell selection method according to an embodiment of the present invention;
FIG. 7A is a sequence chart showing a handover process within the coverage area of the same base station according to an embodiment of the present invention;
FIG. 7B is a drawing illustrating a handover process within the coverage area of the same base station according to an embodiment of the present invention;
FIG. 8A is a sequence chart showing a handover process between different base stations according to an embodiment of the present invention; and
FIG. 8B is a drawing illustrating a handover process between different base stations according to an embodiment of the present invention.

### EXPLANATION OF REFERENCES

- 100: Upper node
- 200,: 200₁, 200₂, 200₃ Base station
- 300: Mobile station

### BEST MODE FOR CARRYING OUT THE INVENTION

The best mode for carrying out the invention is described based on the following embodiments with reference to the accompanying drawings.

Throughout the accompanying drawings, the same reference numbers are used for parts having the same functions, and overlapping descriptions of those parts are omitted.

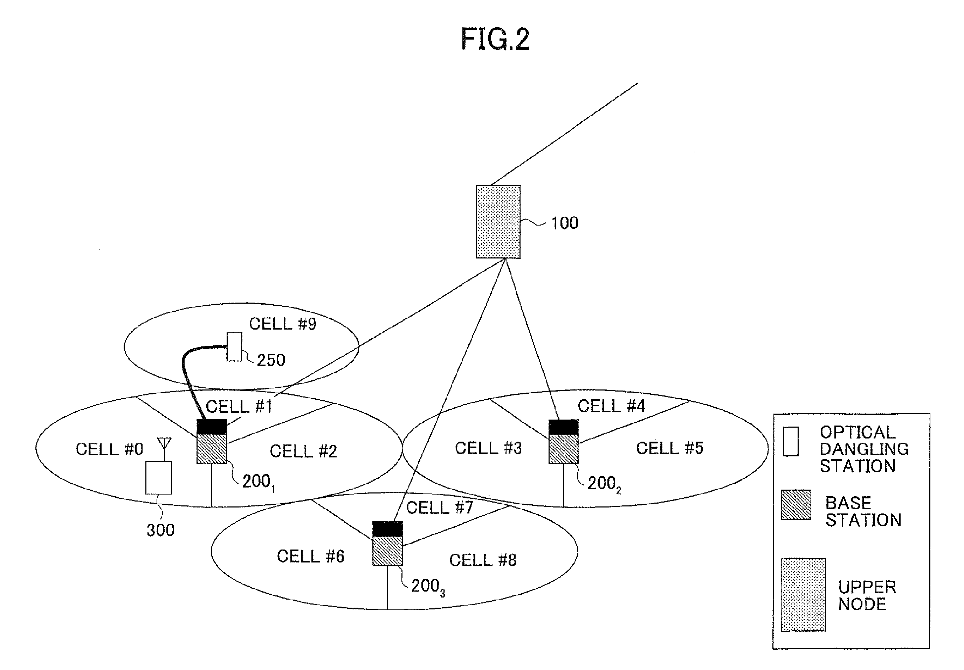

A wireless communication system according to an embodiment of the present invention is described below with reference to FIG. 2.

A wireless communication system of this embodiment includes an upper node 100, base stations 200 (200₁, 200₂, 200₃) connected to the upper node 100, and a mobile station 300 that can wirelessly communicate with the base stations 200.

The wireless communication system may also include an optical dangling station 250. The optical dangling station 250 includes a modulation unit and an RF unit and is connected via an optical fiber to a base station. Using the optical dangling station 250 makes it easier to deploy base stations and makes it possible to simplify the configuration of a base station.

The upper node 100 performs control processes necessary for handover of the mobile station 300. For example, the upper node 100 performs control processes necessary for handover between base stations.

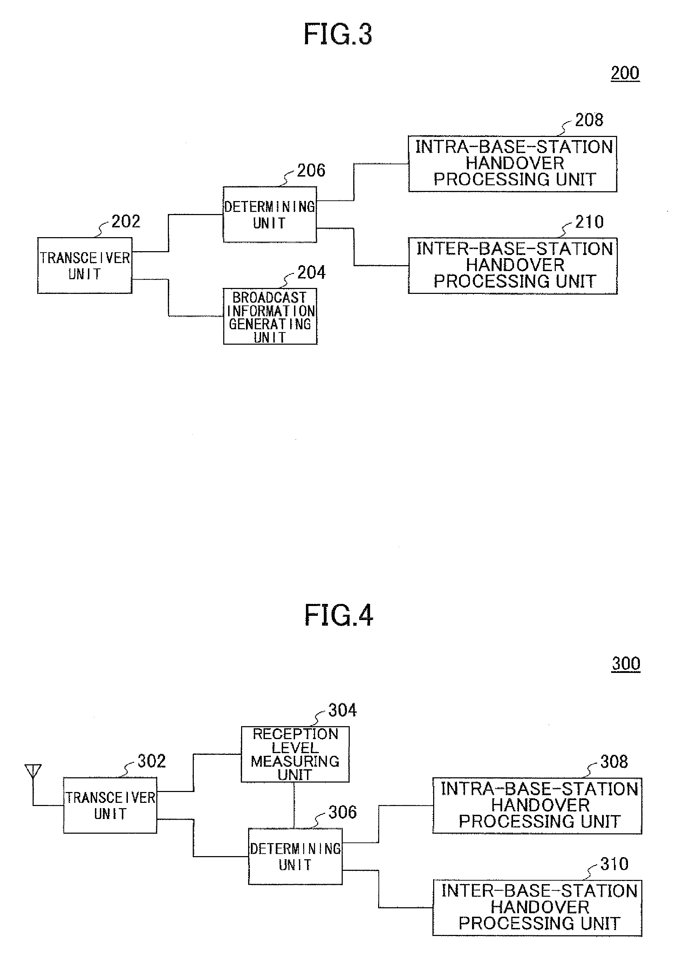

The base station 200 according to an embodiment of the present invention is described below with reference to FIG. 3.

The base station 200 of this embodiment includes a transceiver unit 202, a broadcast information generating unit 204 and a determining unit 206 that are connected to the transceiver unit 202, and an intra-base-station handover (HO) processing unit 208 and an inter-base-station handover (HO) processing unit 210 that are connected to the determining unit 206.

The transceiver unit 202 transmits broadcast information generated by the broadcast information generating unit 204. The transceiver unit 202 also inputs a handover request sent from the mobile station 300 to the determining unit 206.

The determining unit 206 determines whether the handover is intra-base-station or inter-base-station based on the handover request from the transceiver unit 202. Specifically, the determining unit 206 determines whether the handover is intra-base-station or inter-base-station based on the format of the handover request.

For example, the determining unit 206 determines that the handover is intra-base-station by a lower layer such as MAC and determines that the handover is inter-base-station by an upper layer such as RRC based on the differing formats of signals reporting reception levels. This configuration makes it possible to further reduce the delay.

Also, the determining unit 206 reports the reception level of a handover-starting cell. For example, the determining unit 206 sends a CQI report and the reception level of a handover-destination cell. A channel quality indicator (CQI) indicates channel quality. The determining unit 206 may be configured to determine that the handover is intra-base-station when a CQI report is input. Also, the determining unit 206 may be configured to determine that the handover is inter-base-station when a CQI report of a handover-starting cell and a measurement report are input.

The CQI report and the measurement report are both used to report measured reception levels. The CQI report is generated by a lower layer such as MAC. The measurement report is generated by an upper layer and sent by RRC.

The intra-base-station handover indicates handover between cells belonging to the same base station, and the inter-base-station handover indicates handover between cells belonging to different base stations.

When it is determined that the handover is intra-base-station, the determining unit 206 requests the intra-base-station handover processing unit 208 to perform an intra-base-station handover process described later. On the other hand, when it is determined that the handover is inter-base-station, the determining unit 206 requests the inter-base-station handover processing unit 210 to perform an inter-base-station handover process described later.

The intra-base-station handover processing unit 208 performs the intra-base-station handover process in response to the request from the determining unit 206. For example, the intra-base-station handover processing unit 208 sets a reception level threshold indicating the difference between the reception levels of a handover-destination cell and a handover-starting cell and performs the intra-base-station handover process based on the threshold. The intra-base-station handover processing unit 208, for example, sets the reception level threshold for intra-base-station handover at a value that is less than the reception level threshold for inter-base-station handover.

The intra-base-station handover processing unit 208 sets the threshold at a predetermined value (intra-base-station handover threshold), and performs a handover process when the reception level of a handover-destination cell is equal to or less than the reception level of a handover-starting cell. More specifically, the intra-base-station handover processing unit 208 performs a handover process when the difference between the reception levels of a handover-destination cell and a handover-starting cell exceeds a threshold XdB (X≦0).

The inter-base-station handover processing unit 210 performs the inter-base-station handover process in response to the request from the determining unit 206. For example, the inter-base-station handover processing unit 210 performs the inter-base-station handover process based on a reception level threshold indicating the difference between the reception levels of a handover-destination cell and a handover-starting cell. The inter-base-station handover processing unit 210, for example, sets the reception level threshold for inter-base-station handover at a value that is greater than the reception level threshold for intra-base-station handover.

The inter-base-station handover processing unit 210 sets the threshold at a predetermined value (inter-base-station handover threshold), and performs a handover process when the reception level of a handover-destination cell becomes equal to or greater than the reception level of a handover-starting cell. More specifically, the inter-base-station handover processing unit 210 performs a handover process when the difference between the reception levels of a handover-destination cell and a handover-starting cell exceeds a threshold XdB (0≦X).

Next, the mobile station 300 according to an embodiment of the present invention is described with reference to FIG. 4.

The mobile station 300 of this embodiment includes a transceiver unit 302, a reception level measuring unit 304 and a determining unit 306 that are connected to the transceiver unit 302, and an intra-base-station handover processing unit 308 and an inter-base-station handover processing unit 310 that are connected to the determining unit 306. The reception level measuring unit 304 is also connected to the determining unit 306.

The transceiver 302 receives a signal from the base station 200 and inputs the signal to the reception level measuring unit 304. Also, the transceiver unit 302 reports a reception level measured by the reception level measuring unit 304 to the base station 200. For example, the transceiver 302 sends the reception level as a CQI report to the base station 200. The transceiver 302 also receives a broadcast channel from the base station 200 and inputs the broadcast channel to the determining unit 306. Further, the transceiver 302 sends a handover request input from the determining unit 306 to the base station 200.

The determining unit 306 determines, based on broadcast information, whether handover within the coverage area of the same base station or handover between different base stations has become necessary because of the movement of the mobile station. For example, if it is determined that the handover is intra-base-station based on information in the broadcast information indicating either intra-base-station handover or inter-base-station handover, the determining unit 306 requests the reception level measuring unit 304 to measure the reception levels of a handover-starting cell and a handover-destination cell. In this case, the determining unit 306 requests the intra-base-station handover processing unit 308 to perform an intra-base-station handover process.

Meanwhile, if it is determined that the handover is inter-base-station based on information in the broadcast information indicating either intra-base-station handover or inter-base-station handover, the determining unit 306 requests the reception level measuring unit 304 to measure the reception levels of a handover-starting cell and a handover-destination cell. In this case, the determining unit 306 requests the inter-base-station handover processing unit 310 to perform an inter-base-station handover process.

When a common scramble code is used for cells belonging to the same base station, the determining unit 306 may be configured to determine whether the handover is intra-base-station based on orthogonal codes by which the scramble code is multiplied. The mobile station 300 can recognize orthogonal codes. The mobile station can determine whether the handover is performed between cells belonging to the same base station based on the orthogonal codes.

The intra-base-station handover processing unit 308 sets a reception level threshold indicating the difference between the reception levels of a handover-destination cell and a handover-starting cell and performs the intra-base-station handover process based on the threshold. The intra-base-station handover processing unit 308, for example, sets the reception level threshold for intra-base-station handover at a value that is less than the reception level threshold for inter-base-station handover.

The intra-base-station handover processing unit 308 sets the threshold at a predetermined value, and sends a handover request to the base station 200 when the reception level of a handover-destination cell is equal to or less than the reception level of a handover-starting cell. More specifically, the intra-base-station handover processing unit 308 sends the handover request to the base station 200 when the difference between the reception levels of a handover-destination cell and a handover-starting cell exceeds a threshold XdB (0≦X).

The inter-base-station handover processing unit 310 performs the inter-base-station handover process in response to the request from the determining unit 306. For example, the inter-base-station handover processing unit 310 performs the inter-base-station handover process based on a reception level threshold indicating the difference between the reception levels of a handover-destination cell and a handover-starting cell. The inter-base-station handover processing unit 310, for example, sets the reception level threshold for inter-base-station handover at a value that is greater than the reception level threshold for intra-base-station handover.

The inter-base-station handover processing unit 310 sets the threshold at a predetermined value, and sends a handover request to the base station 200 when the reception level of a handover-destination cell becomes equal to or greater than the reception level of a handover-starting cell. More specifically, the inter-base-station handover processing unit 310 sends the handover request to the base station 200 when the difference between the reception levels of a handover-destination cell and a handover-starting cell exceeds a threshold XdB (0≦X).

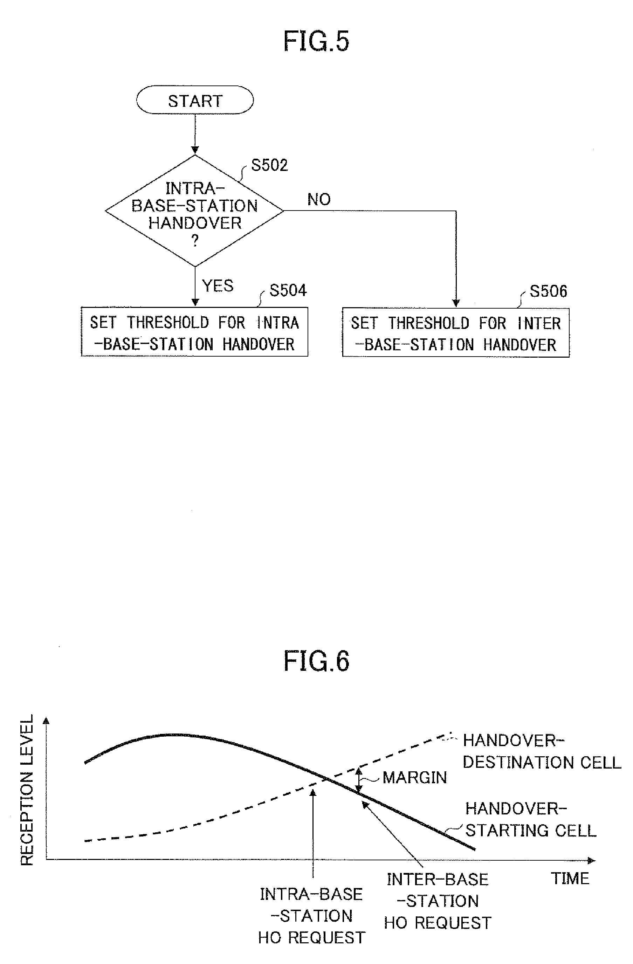

Next, operations of the mobile station 100 of this embodiment are described with reference to FIG. 5.

The determining unit 306 determines whether the handover is intra-base-station based on a received signal from a base station (step S502).

If the handover is intra-base-station (YES in step S502), the intra-base-station handover processing unit 308 sets a threshold for intra-base-station handover as described above and performs the intra-base-station handover process (step S504). For example, as shown in FIG. 6, the intra-base-station handover processing unit 308 sends a handover request when the reception level of a handover-destination cell is equal to or less than the reception level of a handover-starting cell, i.e., a serving cell.

Meanwhile, if the handover is inter-base-station (NO in step S502), the inter-base-station handover processing unit 310 sets a threshold for inter-base-station handover as described above and performs the inter-base-station handover process (step S506). For example, as shown in FIG. 6, the inter-base-station handover processing unit 310 sends a handover request when the reception level of a handover-destination cell becomes equal to or greater than the reception level of a handover-starting cell, i.e., a serving cell. In other words, the inter-base-station handover processing unit 310 sends a handover request when the reception level of the handover-destination cell becomes equal to or greater than a value obtained by adding a margin to the reception level of the serving cell.

When handover takes place within the coverage area of the same base station, the handover process is performed within a serving base station. Therefore, there is no problem even if handover is performed frequently. For this reason, the intra-base-station handover processing unit 308 sets the reception level threshold for intra-base-station handover to a value, e.g., 0 or a negative value, that is less than the reception level threshold for inter-base-station handover, and sends a handover request based on the threshold.

Meanwhile, it is not preferable to perform handover frequently between different base stations because a ping-pong effect is caused by variation of the reception level. For this reason, the inter-base-station handover processing unit 310 sets the reception level threshold for inter-base-station handover at a value that is greater, for example, by a predetermined margin, than the reception level threshold for intra-base-station handover.

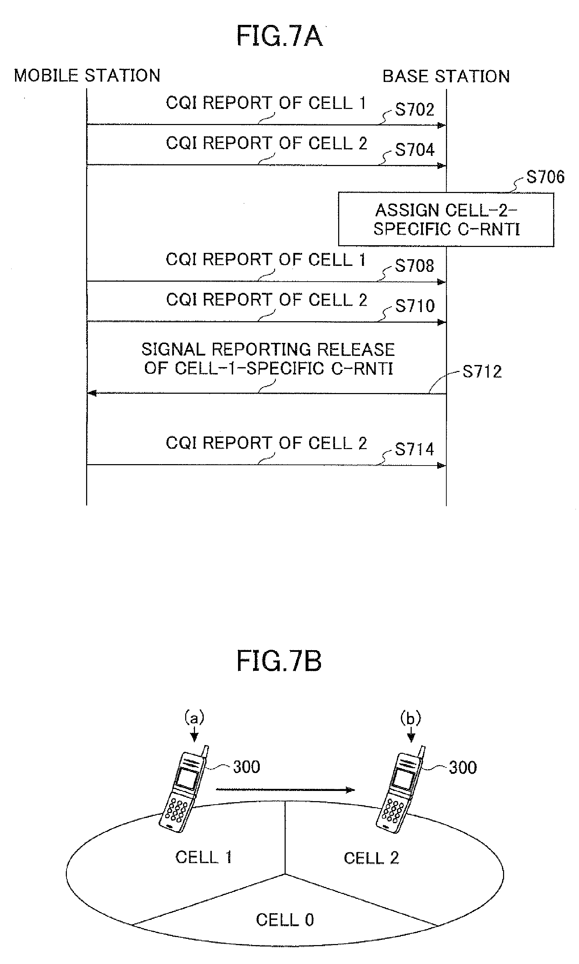

Next, an intra-base-station handover process in the wireless communication system of this embodiment is described with reference to FIGs. 7A and 7B.

In this example, it is assumed that the mobile station 300 moves from cell 1 to cell 2.

When it is determined that the handover is intra-base-station at point (a) in cell 1, the reception level measuring unit 304 of the mobile station 300 measures the reception level of cell 1 and sends the measured reception level to the base station 200. For example, the reception level measuring unit 304 sends the reception level as a CQI report to the base station 200 (step S702).

Next, the reception level measuring unit 304 of the mobile station 300 measures the reception level of cell 2 at point (b) in cell 2 and sends the measured reception level to the base station 200. For example, the reception level measuring unit 304 sends the reception level as a CQI report to the base station 200 (step S704).

Then, the intra-base-station handover processing unit 208 of the base station 200 assigns a cell specific radio network temporary identifier (C-RNTI) specific to cell 2 to the mobile station 300 (step S706). RNTI indicates a temporary user identifier and C-RNTI is a temporary user identifier specific to a cell. Assigning a C-RNTI by MAC makes it possible to further reduce the delay. Hereafter, it is assumed that a C-RNTI is assigned to the mobile station 300 by MAC. In this step, the switch from cell 1 to cell 2 may be reported to RRC.

Next, the reception level measuring unit 304 of the mobile station 300 measures the reception level of cell 1 at point (b) and sends the measured reception level to the base station 200. For example, the reception level measuring unit 304 sends the reception level as a CQI report to the base station 200 (step S708).

Then, the reception level measuring unit 304 of the mobile station 300 measures the reception level of cell 2 at point (b) and sends the measured reception level to the base station 200. For example, the reception level measuring unit 304 sends the reception level as a CQI report to the base station 200 (step S710).

The intra-base-station handover processing unit 208 of the base station 200 releases the C-RNTI specific to cell 1 and reports the release to the mobile station 300.

Then, the reception level measuring unit 304 of the mobile station 300 measures the reception level of cell 2 at point (b) and sends the measured reception level to the base station 200. For example, the reception level measuring unit 304 sends the reception level as a CQI report to the base station 200 (step S714).

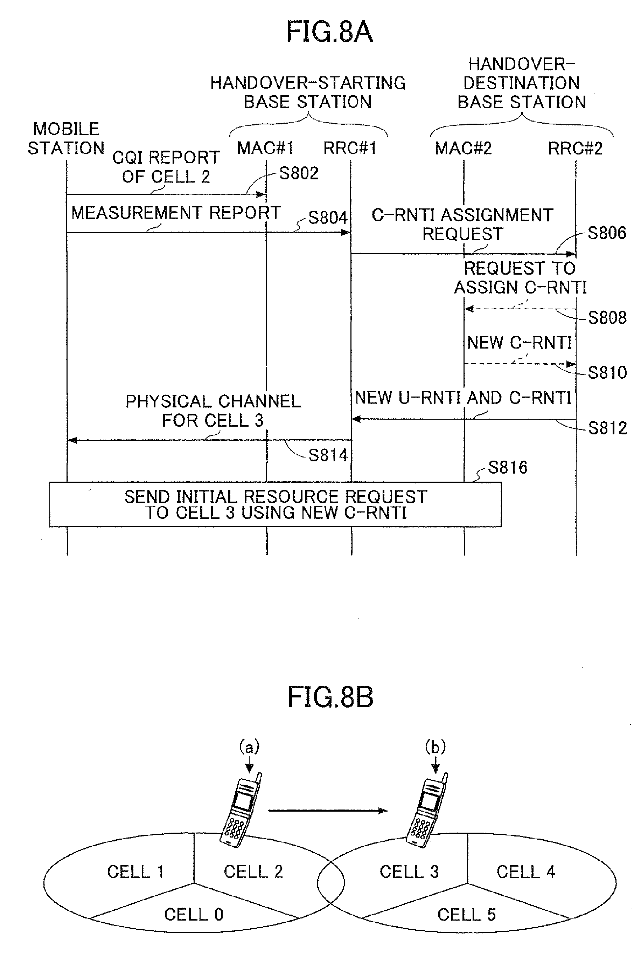

Next, an inter-base-station handover process in the wireless communication system of this embodiment is described with reference to FIGs. 8A and 8B.

In this example, it is assumed that the mobile station 300 moves from cell 2 to cell 3. Cell 2 and cell 3 belong to different base stations.

When it is determined that the handover is inter-base-station at point (a) in cell 2, the reception level measuring unit 304 of the mobile station 300 measures the reception level of cell 2 and sends the measured reception level to the handover-starting base station 200. For example, the reception level measuring unit 304 sends the reception level as a CQI report to the handover-starting base station 200 (step S802).

The inter-base-station handover processing unit 310 of the mobile station 300 sends a measurement report at point (b) in cell 3 to the handover-starting base station 200 (step S804).

Next, the inter-base-station handover processing unit 210 of the handover-starting base station requests the handover-destination base station covering cell 3 to assign a C-RNTI to the mobile station 300 (step S806).

The inter-base-station handover processing unit 210 of the handover-destination base station assigns a C-RNTI to the mobile station 300 (steps S808 and S810). For example, the inter-base-station handover processing unit 210 performs a process as described below. RRC requests MAC to assign a C-RNTI. MAC assigns a C-RNTI in response to the request from RRC.

The inter-base-station handover processing unit 210 of the handover-destination base station reports a new user identifier, e.g., a UTRAN radio network temporary identifier (U-RNTI) for identifying a user in UTRAN, and a C-RNTI to the handover-starting base station (step S812).

The inter-base-station handover processing unit 210 of the handover-starting base station reports a physical channel for cell 3 to the mobile station 300 (step S814). Specifically, the inter-base-station handover processing unit 210 reports the newly assigned U-RNTI and C-RNTI to the mobile station 300.

Then, the mobile station 300 sends an initial resource request to cell 3 using the newly assigned C-RNTI (step S816).

The present international application claims priority from Japanese Patent Application No. 2006-038510 filed on February 15, 2006, the entire contents of which are hereby incorporated herein by reference.

### INDUSTRIAL APPLICABILITY

A mobile station, a base station, and a cell selection method according to embodiments of the present invention may be applied to a wireless communication system.

## Claims

1. A mobile station, comprising:
a determining unit configured to determine whether handover is intra-base-station based on a received signal; and
a reporting unit configured to report the determination result to a base station.

2. The mobile station as claimed in claim 1, wherein the determining unit is configured to determine whether the handover is intra-base-station based on identification information in a broadcast channel.

3. The mobile station as claimed in claim 1, wherein the determining unit is configured to determine whether the handover is intra-base-station based on at least one of cell-specific information and base-station-specific information.

4. The mobile station as claimed in claim 1, wherein the reporting unit is configured to switch reporting means based on the determination result.

5. The mobile station as claimed in claim 1, wherein the reporting unit is configured to change a report timing based on the determination result.

6. The mobile station as claimed in claim 5, wherein the reporting unit is configured
to start reporting the determination result when a reception level of a handover-destination cell is equal to or less than a reception level of a handover-starting cell if the handover is intra-base-station; and to report the determination result when the reception level of the handover-destination cell becomes equal to or greater than the reception level of the handover-starting cell if the handover is inter-base-station.

7. A base station, comprising:
a determining unit configured to determine whether handover is intra-base-station or inter-base-station based on a handover request from a mobile station; and
an intra-base-station handover processing unit configured to perform an intra-base-station handover process based on a reception level threshold for intra-base-station handover if the handover is intra-base-station.

8. The base station as claimed in claim 7, further comprising:
a broadcast information generating unit configured to generate broadcast information including cell identification information; and
a sending unit configured to send the broadcast information.

9. The base station as claimed in claim 7, further comprising:
a specific information generating unit configured to generate at least one of cell-specific information and base-station-specific information.

10. The base station as claimed in claim 9, wherein the specific information generating unit is configured to generate a scramble code specifically assigned to the base station.

11. A cell selection method, comprising:
a handover determining step of determining, by a mobile station, whether handover is intra-base-station based on a received signal;
a handover request sending step of sending, by the mobile station, a handover request indicating the determination result to a base station;
an inter-base-station handover determining step of determining, by the base station, whether the handover is intra-base-station or inter-base-station based on the handover request; and
an intra-base-station handover processing step of performing, by the base station, an intra-base-station handover process based on a reception level threshold for intra-base-station handover if the handover is intra-base-station.

12. The cell selection method as claimed in claim 11, wherein in the information determining step, whether the handover is intra-base-station is determined based on identification information in a broadcast channel.

13. The cell selection method as claimed in claim 11, wherein in the information determining step, whether the handover is intra-base-station is determined based on at least one of cell-specific information and base-station-specific information.

14. The cell selection method as claimed in claim 11, further comprising:
a broadcast information generating step of generating, by the base station, broadcast information including cell identification information; and
a broadcast information sending step of sending, by the base station, the broadcast information.

15. The cell selection method as claimed in claim 13, further comprising:
a specific information generating step of generating, by the base station, at least one of the cell-specific information and the base-station-specific information.

16. The cell selection method as claimed in claim 15, wherein in the specific information generating step, a scramble code specifically assigned to the base station is generated.
